# EUROPEAN PATENT APPLICATION

(11) **EP 1 408 703 A2**
(43) Date of publication of application: **14.04.2004**
(21) Application number: 03022891.0
(22) Date of filing: 08.10.2003
(51) Int. Cl.: H04N 13/02, H04N 13/00

(54) **Electronic stereoscopic imaging system**

(30) Priority: 10.10.2002 JP 2002296896
(71) Applicant: Fuji Photo Optical Co., Ltd., Saitama-shi, Saitama (JP); Ai Systems, Ltd., Saitama-shi, Saitama (JP)
(72) Inventor: Ando, Kunio, Ai Systems, Ltd., Saitama-shi, Saitama (JP)
(74) Representative: TER MEER STEINMEISTER & PARTNER GbR

(57) **Abstract**

An electronic stereoscopic imaging system having right and left image pick-up devices (16R, 16L) and right and left image data memories has a memory control module (21) that is adapted to shift read start addresses of the right and left memories (20R, 20L) for horizontal pixel lines of right and left solid state image sensors (15R, 15L) to lower and higher addresses, respectively, according to object distances detected or visually determined so as thereby to vary a convergence angle of the right and left image pick-up devices (16R, 16L) with respect to the object according to the object distances apparently similar to a specified convergence angle suitable for natural stereoscopic vision.

## Description

### BACKGROUND OF THE INVENTION

### 1. Field of the Invention

The present invention relates to an electronic stereoscopic imaging system especially employed as an electronic stereoscopic endoscope or an electronic stereoscopic microscope that provides alternating right and left video images displayed on a monitor which can be perceived as a three-dimensional image having stereoscopic depth when observed through a viewing device.

### 2. Description of the Related Art

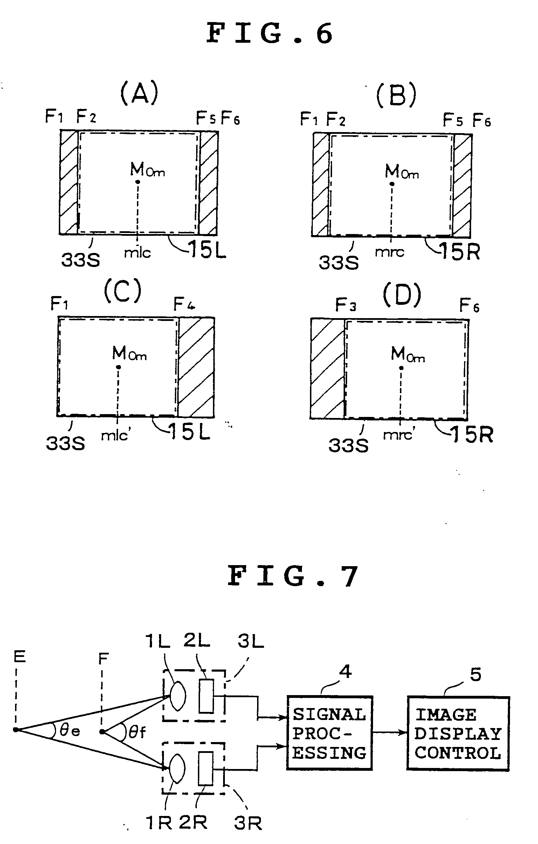

Before describing the present invention in detail, reference is made to Figure 7 for the purpose of providing brief background that will enhance an understanding of the fundamental structure of an electronic stereoscopic imaging system for viewing three-dimensional images of an object. As shown in Figure 7, the electronic stereoscopic imaging system fundamentally comprises a left image pick-up unit 3L that includes an objective lens system 1L and a solid-state image sensor such as a charge coupled device (CCD) 2L, a right image pick-up unit 3R that includes an objective lens system 1R and a solid-state image sensor such as a charge coupled device (CCD) 2R, a signal processor module 4 for processing right and left image signals provided by the right and left image pick-up units 3R and 3L, respectively, and a viewing system 5.

According to the electronic stereoscopic imaging system thus structured, the processor module 4 processes signals of right and left optical images from by the right and left image pick-up units 3R and 3L to generate time-multiplexed right and left image signals and alternately provide them to the viewing system 5 which includes a monitor and a viewing device (e.g., specially-designed eyeglasses which is well known in the art.). The monitor displays alternating right and left color video images corresponding to the alternately-provided time-multiplexed image signals. A properly-equipped viewer of the monitor will perceive three-dimensional color video images of an object due to repeatedly alternating right and left color video images displayed on the monitor. One example of the electronic stereoscopic imaging system is disclosed in, for example, Japanese Patent Laid-Open No. 1-246989.

However, while the prior art electronic stereoscopic imaging system such as an electronic stereoscopic endoscope can process display video images corresponding to alternately-provided image signals that are provided by the right and left image pick-up units 3R an 3R and then processed by the processor module 4 on the monitor which can be perceived as a three-dimensional color image having stereoscopic depth when observed through a viewing device, there is the problem that the convergence angle or stereo angle of the image pick-up units 3R and 3L (which refers to the relative convergence of the axes of the two objective lens systems of the right and left image pick-up units 3R and 3L) varies according to object distances from the image pick-up units 3R and 3L. This results in a difference in stereoscopic effect.

Specifically, as shown in Figure 7, the convergence angle necessary for stereoscopic vision is θe at an object distance of E, and θf, that is greater than θe, at an object distance of F shorter than the object distance of E. When seeing an object stereoscopically with right and left eyes, while the human brain can accommodate itself to a certain change in the convergence angle, it feels eyestrain or the like due to an emphatic stereoscopic effect when an object is seen at somewhat close distances. If an object is at too close distances, the object is seen double.

The convergence angle for naturally perceptible stereopsis is regarded as approximately 2 to 3 degrees and it is however hardly realizable to provide such the convergence angles. As 3-dimensional images of an object at comparatively close object distances produced by conventional electronic stereoscopic imaging systems are viewed with exaggerated stereoscopic effects, it has been strongly desired to extend the range of object distance for naturally perceptible stereopsis as wide as possible.

### SUMMARY OF THE INVENTION

It is therefore an object of the present invention to provide an electronic stereoscopic imaging system which has an extended range of object distance for naturally perceptible stereopsis.

The above object of the present invention is achieved by an electronic stereoscopic imaging system comprising a pair of right and left image pick-up means for gathering right and left optical images of an object and converting the right and left optical images into right and left image signals, respectively, each of which comprises an objective lens system and a solid state image sensor such as a CCD image sensor, a pair of right and left memory means for storing the right and left image signals at addresses specified correspondingly to pixels of the solid state image sensors of the right and left image pick-up means, respectively, memory control means for controlling read of the right and left image signals out of the right and left memory means, respectively, and video signal processing means for performing processing of the right and left image signals necessary for color video images and alternately providing the right and left image signals to a monitor which displays alternating right and left video images corresponding to the right and left image signals, respectively. The control means shifts read start addresses of the right and left memory means for the horizontal pixel lines of the right and left solid state image sensors to lower and higher addresses, respectively, according to object distances from the right and left image pick-up means so as thereby to vary the convergence angle of the right and left image pick-up means with respect to the object according to the object distances apparently similar to a specified convergence angle suitable for natural stereoscopic vision.

The electronic stereoscopic imaging system may further comprises distance signal generating means for automatically or manually generating an object distance signal differing according to object distances with which the memory control means shifts read start addresses of the right and left image data memories in opposite directions, namely in lower and higher address directions, respectively. It is preferred to incorporate an active type of automatic range finding device such as an optical range finding device, an ultrasonic range finding device, an electronic range finding device or a mechanical range finding device as the distance signal generating means which automatically detects an object in object distance zones into which the axial distance of field of the right and left image pick-up means and provide a distance signal corresponding to the subject distance zone to the memory control means.

According to the electronic stereoscopic imaging system of the present invention, since the convergence angle of the right and left image pick-up means is adjusted so as to be apparently similar to a specified convergence angle for natural stereoscopic vision by shifting read start addresses of the right and left image data memories in opposite directions according to object distances, a three-dimensional image of an object is always displayed with an optimum convergence angle on the monitor and, in consequence, is viewed with a natural stereoscopic effect even when the object is at comparatively short distances.

### BRIEF DESCRIPTION OF THE DRAWINGS

The above and other objects and features of the present invention will be clearly understood from the following detailed description when read with reference to the accompanying drawings, wherein the same numeral numbers have been used to denote same or similar parts or mechanisms throughout the drawings, and in which:
Figure 1 is a block diagram schematically illustrating an overall structure of an electronic stereoscopic imaging system according to an embodiment of the present invention;
Figure 2 is an explanatory illustration showing a range finding unit forming a part of the electronic stereoscopic imaging system;
Figure 3 is an explanatory view illustrating center positions of right and left optical image on right and left CCD image sensors which shift according to convergence angles depending on object distances;
Figure 4 is explanatory views showing center positions of right and left optical image on right and left CCD image sensors;
Figure 5 is an explanatory view schematically illustrating horizontal pixel lines of right and left CCD image sensors for explaining read start addresses of right and left memories in which right and left image signals are stored;
Figure 6 is explanatory views showing the positional relationship between used areas of right and left CCD image sensors and the center of a screen window of a monitor; and
Figure 7 is a schematic illustration showing a prior art electronic stereoscopic imaging system.

### DETAILED DESCRIPTION OF THE PREFERRED EMBODIMENTS

In the following description, parts or units which are not of direct importance to the invention and parts which are purely of conventional construction will not be described in detail. For example, details of the CCD drive module, the video image processor module, the memory control module, etc., which necessary to the electronic stereoscopic imaging system will not set out in detail since their construction and operation can easily be arrived at by those skilled in the art.

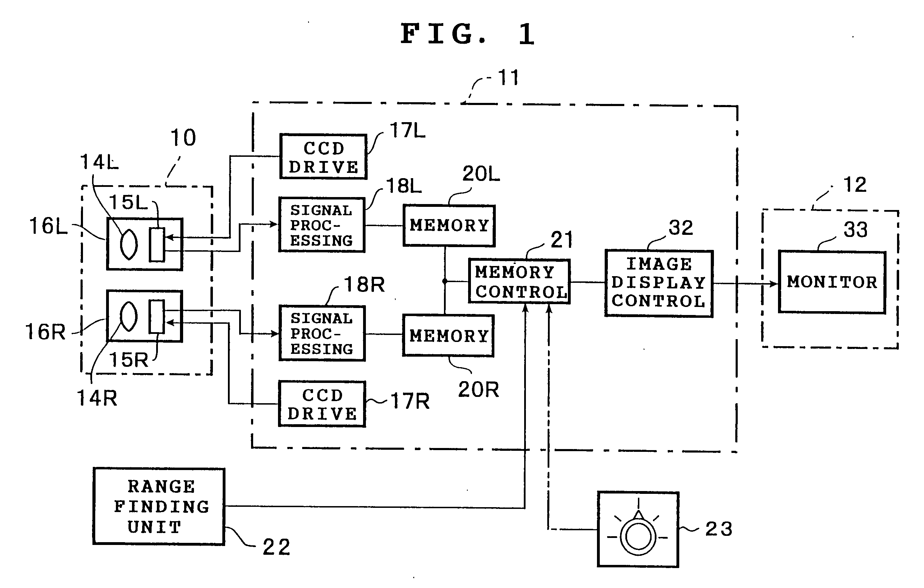

Referring now to the drawings in detail and, in particular, Figure 1 showing an overall structure of an electronic stereoscopic imaging system, such as typically used as an electronic stereoscopic endoscope or an electronic stereoscopic microscope, according to a preferred embodiment of the present invention, the electronic stereoscopic imaging system basically comprises an image pick-up unit 10, an electronic processor unit 11 and a monitor system 12. The image pick-up unit 10 comprises right and left image pick-up modules 16R and 16L arranged side by side. The right image pick-up module 16R comprises an objective lens system 14R operative to produce a right optical image of an object and a solid state image pick-up device such as a charge coupled device (which is hereafter referred to as a CCD image sensor) 15R operative to convert an optical image incident thereupon into image signals. Similarly, the left image pick-up module 16L comprises an objective lens system 14L operative to produce a left optical image of an object and a solid state image pick-up device such as a charge coupled device (which is hereafter referred to as a CCD image sensor) 15L operative to convert an optical image incident thereupon into image signals. The solid state image pick-up device may comprise a metal-oxide semiconductor (MOS) image sensor in place of the CCD image sensor.

The electronic processor unit 11 comprises right and left drive modules 17R and 17L for driving the right and left CCD image sensors 15R and 15L, respectively, to read right and left image signals out of the right and left CCD image sensors 15R and 15L, right and left video signal processing modules 18R and 18L for receiving the right and left image signals from the right and left CCD image sensors 15R and 15L, respectively and performing various processing of the right and left image signals necessary for color video images, and right and left image data memories (left and right frame memories) 20R and 20L for storing the left and right color image signals, respectively therein. The right image data memory 20R stores the right color image signals at addresses specifically corresponding to respective pixels of the right CCD image sensor 15R. Similarly, the left image data memory 20L stores the left color image signals at addresses specifically corresponding to respective pixels of the left CCD image sensor 15L.

The electronic processor unit 11 further comprises a memory control module 21 that controls write of the right and left color image signals into the right and left image data memories 20R and 20L, respectively, and controls alternately read of the right and left color image signals out of the right and left image data memories 20R and 20L, respectively. More specifically, the memory control module 21 writes the right and left color image signals into the image data memories 20R and 20L at a speed of, for example, 1/60 second per one field and alternately reads the right and left color image signals out of the image data memories 20R and 20L at a speed, for example, twice as high as the writing speed, i.e. 1/120 second per one field.

The electronic processor unit 11 further comprises an image display control unit 32 operative to reform the right and left color image signals for three-dimensional video images and to alternately provide the right and color image signals by one frame to a monitor 33 of the monitor system 12 which displays alternating right and left color video images corresponding to the right and left color image signals, respectively. The alternating left and right color images displayed on the monitor 33 can be perceived as a three-dimensional color image having stereoscopic depth when observed through a viewing device (not shown) such as a specially-designed eyeglass. Such a viewing device is known in various forms and may take any well known form.

Although not shown in Figure 1 for staying away from complication, the electronic stereoscopic imaging system is equipped with a synchronous control module for synchronizing operation of the image pick-up unit 10, the electronic processor unit 11 and the monitor system 12. Operation and fabrication of synchronous control modules is well known to those skilled in the art and need not be explained in detail herein.

The electronic stereoscopic imaging system is further equipped with a range finding unit 22 in close proximity to the image pick-up unit 10 for gauging a distance to an object. Operation and fabrication of the range finding unit 22 will be hereafter described in detail later.

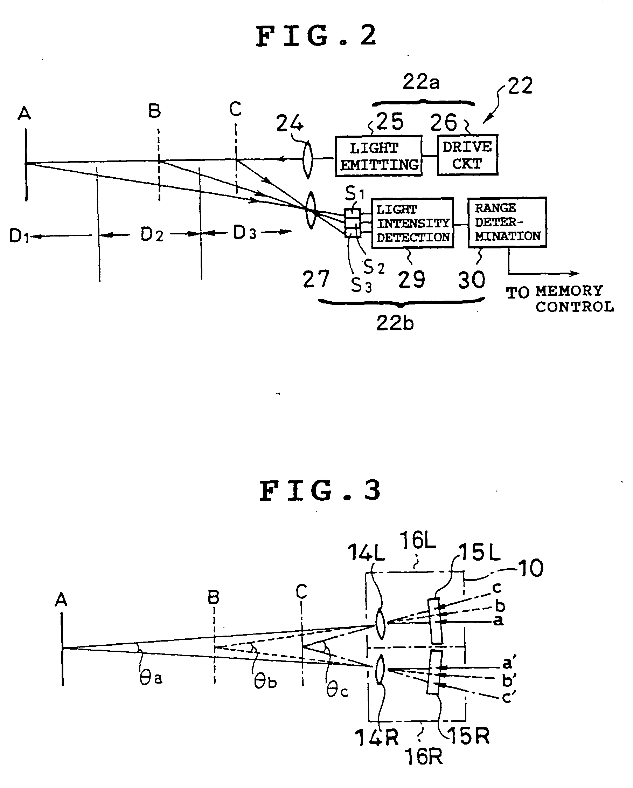

Figure 2 illustrates the range finding unit 22 in detail by way of example. As shown, the range finding unit 22 comprises a light projection system 22a and light receiving system 22b. The light projection system 22a includes a projection lens 24, a light emitting element 25 such as an infrared laser diode or the like and a drive circuit 26. The light emitting element 25 is exited with modulated drive signal supplied by the driver module 25 to emit light which is collimated by the projection lens 24 and directed towards an object in the axial distance of field of the image pick-up unit 10 shown in Figure 1 for output from the range finding unit 22. On the other hand, the light receiving system 22b comprises a focusing lens 27, a photoelectric sensor 28 consisting of a plurality of, for example three, photo diodes S1 to S3, a light intensity detection module 29 and a range determination module 30. The light emitted by the light emitting element 25 and returned to the range finding unit 22 that is focused on the photoelectric sensor 28 by the focusing lens 27 is received by the photo diodes S1 to S3. Each of the photo diodes S1 to S3 provides a photoelectric current signal representing an amount (intensity) of light incident thereupon to the light intensity detection module 29. The light intensity detection module 29 at least amplifies and converts the photoelectric current signals to voltage signals. The outputs of the light intensity detection module 29 are then supplied to the range determination module 30. The range determination module 30 compares amplitudes of three outputs of the light intensity detection module 29 with one another to determine a distance zone in which an object is present and provides a range signal representative of the distance zone to the memory control module 21.

More specifically, the axial distance of field of the image pick-up unit 10 shown in Figure 1 is divided into the same number of distance zone as the number of photo diodes forming the photoelectric sensor 28. That is, in the case of the shown embodiment in Figure 2 in which the photoelectric sensor 28 consists of three photo diodes S1 to S3, the axial distance of field of the image pick-up unit 10 is divided into three distance zones, namely a long distance zone D₁, a middle distance zone D₂ and a short distance zone D₃. Accordingly, in this instance, the photo diode S1 receives the largest amount of light among the three when an object is in a position A in the longer distance zone D₁, S2 when an object is in a position B in the middle distance zone D₂, and S3 when an object is in a position C in the shorter distance zone D₃. The range determination module 30 determines which photo diode receives the largest amount of light among three on the basis of the three output of the light intensity detection module 29. The range finding unit 22, more specifically, the range determination module 30 provides a range signal as an indication of the determined distance zone to the memory control module 21. The memory control module 21 is able to shift read start addresses of the and right and left image data memories 20R and 20L according to range signals provided from the range finding unit 22 correspondingly to the distance zones D₁, D₂ and D₃ in which an object is present. As will be described later, the shift of read start address causes alternating light and left right and left video images displayed on the monitor to shift towards a central point of view, i.e. a center of interpupillary distance, so as thereby to prevent a three-dimensional image on the monitor 33 from being viewed with exaggerated stereoscopic effects.

The range finding unit 22 may be replaced with a manually operated range selection dial 23 that is manually operated to select one of three positions for the longer distance zone D₁, the middle distance zone D₂ and the shorter distance zone D₃ according to a visually estimated object distance. When the range selection dial selects any one of the three positions, it provides a range signal representing the selected distance zone to the memory control module 21.

The viewing device allows a viewer to observe high resolution stereoscopic video images of an object on the monitor 33 by permitting a first eye of the viewer to see only the right video images displayed on the monitor and a second eye of the viewer to see only the left video images displayed on the monitor. The viewer thus perceives the alternating right and left video images displayed on the monitor 33 as three-dimensional video images of the object having stereoscopic depth. A typical example of the viewing device is mechanically shuttering eyewear or eyeglasses which alternately blink with synchronization signals from the synchronous control module on a controlled cycle of 1/120 second to provide a first eye of a wearer with substantially only the right images displayed on the screen of the monitor 33 and a second eye of the wearer with substantially only the left images displayed on the screen of the monitor 33. Another example is optically shuttering eyewear system includes a liquid crystal shutter put in front of the screen of the monitor 33 which alters the direction of polarization between first and second polarizations in response to the control signal and eyewear or eyeglasses having a first lens with the first polarization and a second lens with the second polarization. The optically shuttering eyewear alters polarization with synchronization signals from the synchronous control module on a controlled cycle of 1/120 second to provide a first eye of a wearer with substantially only the right images with the first polarization and a second eye of the wearer with substantially only the left images with the second polarization. Various suitable viewing devices like these are commercially available.

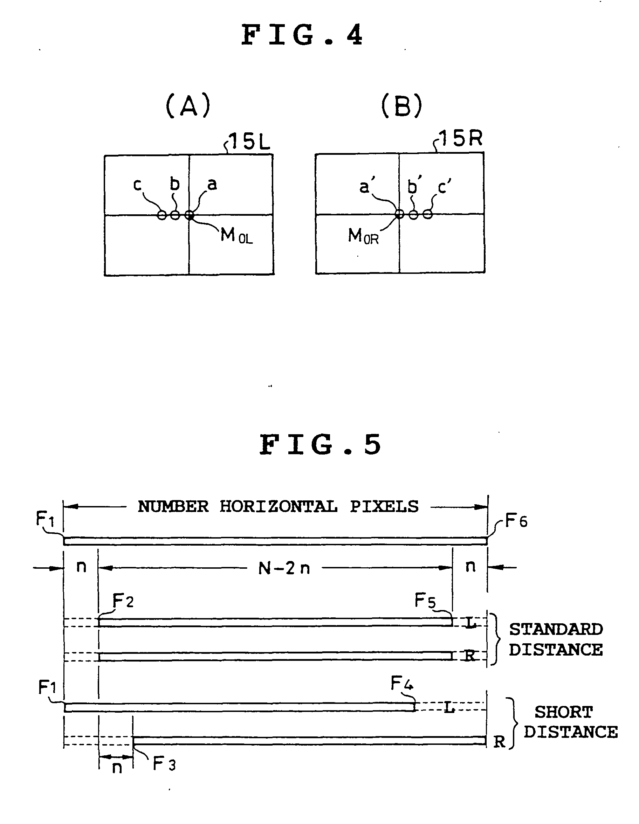

Figures 3 and 4 illustrate how right and left optical images shift within image areas of the right and left CCD image sensors 15R and 15L, respectively, due to object distances. When an object is at a comparatively long distance A, the center of a left optical image of the object is focused on in a position a at the center M_{0L} of the image area of the left CCD image sensor 15L. As the object comes closer to the image pick-up unit 10, the left optical image focused on in the image area of the left CCD image sensor 15R shifts left. Specifically, the center of the left optical image occupies a position *b* away left from the center M_{0L} of the image area of the left CCD image sensor 15L when the object is at a moderate distance B, and a position *c* further away left from the center M_{0L} of the image area of the left CCD image sensor 15L when the object is at a comparatively short distance C. Similarly, the center of a right optical image of the object is focused on in a position *a*' at the center M_{0L} of the image area of the right CCD image sensor 15R when an object is at a comparatively long distance A. As the object comes closer to the image pick-up unit 10, the right optical image focused on in the image area of the right CCD image sensor 15R shifts right. Specifically, the center of the right optical image occupies a position b' away right from the center M_{0R} of the image area of the right CCD image sensor 15R when the object is at a moderate distance B, and a position *c*' further away right from the center M_{0R} of the image area of the right CCD image sensor 15R when the object is at a comparatively short distance C.

That is, convergence or stereo angles of the image pick-up unit 10 (which refers to the relative convergence of the axes of the two objective lens systems 14L and 14R of the right and left image pick-up units 16R and 16L) with respect to objects at the distances A, B and C, respectively, are θa, θb and θc (θa < θb < θc) in degrees, respectively. In short, the convergence angle of the image pick-up unit 10 becomes larger as the object distance decreases. As apparent from Figure 4, seeing on the image surfaces of the right and left CCD image sensors 15R and 15L, the centers of right and left optical images focused on the CCD image sensor surfaces shift farther away in opposite horizontal directions from the centers M_{0R} and M_{0L} of the right and left CCD image sensors 15R and 15L, respectively, as the object distance becomes shorter. In other words, they shift farther away from each other in the horizontal direction as the object distance becomes shorter.

A horizontal shift distance of pictorial position (i.e. the center of an optical image) with respect to a change in the convergence angle is drawn as a length represented by the number of pixels in one horizontal row of pixels of the CCD image sensor (which is hereafter referred to as a horizontal shift length for simplicity). For example, in the case where each of the right and left CCD image sensors 15R and 15L comprises a 1/6 inch CCD image sensor that has 768 horizontal pixels each of which is 3.2 µm in width and the right and left objective lens systems 14R and 14L have a focal length of 2 mm and an inter-lens distance of 4 mm, the relationship is between convergence angle and horizontal shift length with respect to object distance is such as shown in Table I below.

**TABLE I**

| Object Distance | Convergence Angle | Horizontal Shift Length |
|---|---|---|
| 80 mm | 2.9° | 0 |
| 60 mm | 3.8° | 10 |
| 50 mm | 4.6° | 19 |

It can be said that a normally appropriate convergence angle for natural stereoscopic vision is up to approximately 3 degrees. In light of this appropriate convergence angle, the image pick-up unit 10 has a convergence angle of 2.9 degrees that is approximated to the normally appropriate convergence angle and, accordingly, an object distance of 80 mm may be taken as a standard object distance. When going by the standard object distance of 80 mm, an optical image of an object shifts right or left on the image surfaces of the right and left CCD image sensor by a horizontal shift length of 10 pixels when the object is at an object distance of 60 mm and by a horizontal shift length of 19 pixels when the object is at an object distance of 50 mm. Therefore, when shifting back the optical image of the object at an object distance of 60 mm or 50 mm by the horizontal shift length according to the object distance, the optical image is positioned with its center aligned with the center of the image area of the CCD image sensor like the optical image of an object at the standard object distance of 80 mm for the normally appropriate convergence angle.

The shifting back of optical images of an object at object distances shorter than the standard object distance is accomplished by shifting read start addressed of the image data memories as will be described below.

Figure 5 schematically shows horizontal lines of pixels (which is referred to as a horizontal pixel line) of CCD image sensors 15R and 15L for explanatory purpose. The horizontal pixel line comprises N pixels (e.g. 768 pixels). Right image signals of the pixels of each horizontal pixel line are stored in the right image data memory 20R at addresses from F₁ (the lowest address) to F₆ (the highest address) and image signals of N-2n pixels of each horizontal pixel line are effectively used to provide a right video image for one frame that is displayed on an entire screen window 33S (whose center is indicated by M₀ₘ in Figure 6) of the monitor 33. When an object is at the standard object distance of, for example 80 mm, the memory control means 21 reads left and right image signals at addresses from F₂ to F₅ that correspond to N-2n pixels of each horizontal pixel low except first and last *n* pixels, of the right and left CCD image sensors 15R and 15L to cover one horizontal line of one frame of right and left video images. The left and right video images are displayed on the monitor 33 with their centers mrc and mlc aligned with the center M₀ₘ of the screen window 33S of the monitor 33 as shown in Figure 6, (A) and (B). On the other hand, when an object is at distances shorter than the standard object distance, the memory control means 21 reads left image signals at addresses from F₁ lower than the address F₂ to F₅ lower than the address F₅ that correspond to N-2n pixels of each horizontal pixel low except last 2*n* pixels of the left CCD image sensor 15L to cover one horizontal line of one frame of left video image and right image signals at addresses from F₃ higher than the address F₂ to F₆ that correspond to N-2n pixels of each horizontal pixel low except first 2*n* pixels of the right CCD image sensor 15R to cover one horizontal line of one frame of right video image. The left and right video images are displayed on the monitor 33 with their centers mrc' and mlc' aligned with the center M₀ₘ of the screen window 33S of the monitor 33 as shown in Figure 6, (C) and (D).

That is, right and left video images are always displayed on the monitor 33 with their centers aligned with the center of the screen of the screen window of the monitor even when an object is at closer distances than the standard object distance by shifting read start addresses of the right and left image data memories in opposite directions, namely a direction of lower address and a direction of higher address, according to object distances in this manner. In other words, the convergence angle of the image pick-up unit 10 for an object at closer distances can be made apparently similar to the convergence angle for an object at the standard object distance.

In the embodiment described above where each of the right and left CCD image sensors 15R and 15L comprises a 1/6 inch CCD image sensor that has 768 horizontal pixels and the right and left objective lens systems 14R and 14L have a focal length of 2 mm and an inter-lens distance of 4 mm, the image pick-up unit 10 whose axial distance of field is divided into three zones, i.e. the long distance zone D₁ (standard distance zone), the middle distance zone D₂ and the short distance zone D₃, the image pick-up unit 10 provides convergence angles and horizontal shift lengths as indicated in Table I. When the range finding unit 22 finds an object in the long distance zone D₁ and provides a control signal representative of the long distance zone (standard distance zone) D₁ to the memory control module 21, the memory control module 21 reads the left color image signals of the left image data memory 20L at addresses from F₂ to F₅ corresponding to N-2n pixels, i.e. the horizontal pixel lines except the first and last *n* pixels, of the left CCD image sensor 15L at a speed twice as high as the writing speed, more specifically 1/120 second per one frame and reads the right color image signals of the right image data memory 20R at addresses from F₂ to F₅ corresponding to N-2n pixels, i.e. the horizontal pixel lines except the first and last *n* pixels, of the right CCD image sensor 15R at a speed twice as high as the writing speed, i.e. 1/120 second per one frame. Then, image display control unit 32 alternatively provides the right and left color image signals to the monitor system 12 which displays alternating right and left color video images corresponding to the right and left color image signals on the monitor 33. The centers of alternating right and left color video images are in alignment with the center M₀ₘ of the screen window 33S of the monitor 33.

When the range finding unit 22 finds an object in the middle distance zone D₂ and provides a control signal representative of the middle distance zone D₂ to the memory control module 21, the memory control module 21 shifts a read start address of the left image data memory 20L to a lower address assigned to a pixel 10 pixels ahead of the pixel to which the address F₂ is assigned and reads the left color image signals of the left image data memory 20L at the addresses from the lower address to a (N-2n)th address from the lower address at a speed twice as high as the writing speed, i.e. 1/120 second per one frame. Therefore, the memory control module 21 reads the left color image signals of the left image data memory 20L corresponding to those of N-2n pixels of the horizontal pixel lines except the first n-10 pixels and the last n+10 pixels of the left CCD image sensor 15R. Further, the memory control module 21 shifts a read start address of the right image data memory 20R to a higher address assigned to a pixel 10 pixels after the pixel to which the address F₂ is assigned and reads the right color image signals of the left image data memory 20L at the addresses from the higher address to a (N-2n)th address from the higher address at a speed of 1/120 second per one frame. Therefore, the memory control module 21 reads the right color image signals of the right image data memory 20R corresponding to those of N-2n pixels of the horizontal pixel lines except the first n+10 pixels and the last n-10 pixels of the right CCD image sensor 15R. Then, image display control unit 32 alternatively provides the right and left color image signals to the monitor system 12 which displays alternating right and left color video images corresponding to the right and left color image signals on the monitor 33. The centers of alternating right and left color video images are in alignment with the center M₀ₘ of the screen window 33S of the monitor 33.

Further, when the range finding unit 22 finds an object in the close distance zone D₃ and provides a control signal representative of the middle distance zone D₃ to the memory control module 21, the memory control module 21 shifts a read start address of the left image data memory 20L to a further lower address assigned to a pixel 19 pixels ahead of the pixel to which the address F₂ is assigned and reads the left color image signals of the left image data memory 20L at the addresses from the further lower address to a (N-2n)th address from the further lower address at a speed of 1/120 second per one frame. Therefore, the memory control module 21 reads the left color image signals of the left image data memory 20L corresponding to those of N-2n pixels of the horizontal pixel lines except the first n-19 pixels and the last n+19 pixels of the left CCD image sensor 15R. Further, the memory control module 21 shifts a read start address of the right image data memory 20R to a further higher address assigned to a pixel 19 pixels after the pixel to which the address F₂ is assigned and reads the right color image signals of the left image data memory 20L at the addresses from the further higher address to a (N-2n)th address from the further higher address at a speed of 1/120 second per one frame. Therefore, the memory control module 21 reads the right color image signals of the right image data memory 20L corresponding to those of N-2n pixels of the horizontal pixel lines except the first n+19 pixels and the last n-19 pixels of the right CCD image sensor 15R. Then, image display control unit 32 alternatively provides the right and left color image signals to the monitor system 12 which displays alternating right and left color video images corresponding to the right and left color image signals on the monitor 33. The centers of alternating right and left color video images are in alignment with the center M₀ₘ of the screen window 33S of the monitor 33.

That is, since a part that the convergence angle of the image pick-up unit 10 plays in stereoscopic vision is not too delicate and, on that account and it is not always essential to make a continuous change in the convergence angle of the image pick-up unit 10 correspondingly with a change in object distance over the axial distance of field of the of the image pick-up unit 10, it is enabled to provide natural and satisfactory stereoscopic vision by causing an apparently change in the convergence angle of the image pick-up unit 10 stepwise at object distances relatively closer to the image pick-up unit 10 as described above.

The read operation of the memory control module 21 is performed after a shift of read start addresses of the right and left image data memories 20R and 20L in opposite directions, i.e. lower and higher address directions, according to distance zones in which an object is present as described above. The image display control unit 32 alternately provides the right and left color image signals by one frame, to the monitor 33 of the monitor system 12. The monitor 33 displays alternately right and left color video images corresponding to the right and left color image signals whose centers are in alignment with the center of the screen window 33S of the monitor 33. When viewing the alternating right and left color video images through a specially-designed eyeglasses, the viewer perceives the alternating right and left video images as three-dimensional video images having stereoscopic depth. The three-dimensional image of an object at any object distance is formed with a convergence angle of approximately 3 degrees for natural and satisfactory stereoscopic vision.

Since alternating right and left color video images are displayed at a speed of 120 frames per second, the three-dimensional image of an object displayed on the monitor 33 is not accompanied by flickering even when the object shows motion. It is not essential in three dimensional display to execute write and read of image signals of a moving object at different write and read speeds, respectively and there is nothing wrong with three dimensional display even when executing write and read of image signals of a slow-moving at same write and read speeds, respectively.

It is made possible to divide the axial distance of field of the image pick-up unit 10 into distance zones narrower than the distance zones D₁, D₂ and D₃ and more than three. This is realized by using a high precision photoelectric sensor in the range finding unit 22 shown in Figure 3. However, in light of improvement of inferior stereoscopic effect, it is not always advantageous to detect very narrow distance zones and it may be rather preferred in some cases to detect two distance range by using a photoelectric sensor comprising one or two photoelectric elements.

In the case where the axial distance of field of the image pick-up unit 10 is short, it is allowed to provide only one distance zone close to the image pick-up unit 10 in addition to the standard distance zone for a shift of read start addresses of the image data memories 20R and 20L in opposite directions. This provides significant improvement of the stereoscopic effects of a three dimensional image of an object in the additional distance zone. In this instance, the range finding unit 22 may have a photoelectric sensor 28 comprising a single photoelectric element, for example, such as a photo diode S₃ shown in Figure 2 so as to provide a control signal or address shift signal to the memory control module 21 when the photoelectric sensor 28 receives light higher than a specified level. The range finding unit 22 comprising a single light emitting device and a single element photoelectric sensor is effectively available for electronic stereoscopic endoscopes which have only a greatly constrained end space for installation of associated parts and mechanisms and are often used to observe an internal cavity at close distances.

Furthermore, the video images formed from right and left image signals read out of the right and left CCD image sensors 15R and 15L are enlarged in a horizontal direction in a proportion of N/(N - 2n). For example, when using a CCD image sensor having 410K pixels having 768 horizontal pixels (N = 768; 2n = 20), the image displayed on the monitor is enlarged in horizontal direction by approximately 3%. However, the horizontal enlargement of an image by approximately 3% makes no practical difference.

As described above in connection with illustrative embodiment, a convergence angle of the image pick-up unit is adjusted so as to be apparently similar to a specified convergence angle for natural stereoscopic vision by shifting read start addresses of the right and left image data memories in opposite directions according to object distances, a three-dimensional image of an object is always displayed with an optimum convergence angle on the monitor and, in consequence, is viewed with a natural stereoscopic effect even when the object is at comparatively short distances.

Although the present invention has been described with reference to preferred embodiments thereof, it will be appreciated that variants and other embodiments can be effected by person of ordinary skill in the art without departing from the scope of the invention.

## Claims

1. An electronic stereoscopic imaging system comprising:
a pair of right and left image pick-up means for gathering right and left optical images of an object and converting said right and left optical images into right and left image signals, respectively, each said image pickup means comprising an objective lens system and a solid state image sensor;
a pair of right and left memory means for storing said right and left image signals at addresses specified correspondingly to pixels of said solid state image sensors of said right and left image pick-up means, respectively;
memory control means for controlling read of said right and left image signals out of said right and left memory means, respectively, for one frame;
video signal processing means for performing processing of said right and left image signals read out of said right and left memory means, respectively necessary for color video images and alternately providing said right and left image signals to a monitor which displays alternating right and left video images corresponding to said right and left image signals, respectively; and
wherein said control means shifts read start addresses of said right and left memory means for horizontal pixel lines of said right and left solid state image sensors to lower and higher addresses, respectively, according to distances of said object from said right and left image pick-up means so as thereby to vary a convergence angle of said right and left image pick-up means with respect to said object according to said distances apparently similar to a specified convergence angle suitable for natural stereoscopic vision.

2. An electronic imaging system as defined in claim 1, and further comprising distance signal providing means for providing an object distance signal differing according to distances of said object as an address shift signal with which said control means shifts said read start addresses of said right and left memory means in opposite directions, respectively..

3. An electronic imaging system as defined in claim 2, wherein said distance signal providing means provides said object distance signal differing according to a plurality of distance zones into which an axial distance of field of each of said right and left image pick-up means is divided.

4. An electronic imaging system as defined in claim 3, wherein said distance signal output means comprises manually operated means operative to select said distance zones for providing said object distance signal when operated to select said distance zone in which said object is visually observed.

5. An electronic imaging system as defined in claim 2, wherein said distance signal providing means comprises range finding means for providing said object distance signal according to said distance zone in which said object is automatically detected by said range finding means.

6. An electronic imaging system as defined in claim 2, wherein said axial distance of field is divided into three distance zones for long, middle and short distances, respectively, and said memory control means shifts said read start address of one of said right and left memory to a lower address and said read start address of another of said right and left memory to a higher address when said object distance input means provides said object distance signal corresponding to said middle and short distance zone.
